# EUROPÄISCHE PATENTSCHRIFT

(11) **EP 2 370 798 B1**
(45) Veröffentlichungstag und Bekanntmachung des Hinweises auf die Patenterteilung: **25.12.2013**
(21) Anmeldenummer: 09768514.3
(22) Anmeldetag: 30.11.2009
(51) Int. Cl.: G01K 1/08, G01K 1/16, G01K 7/02

(54) **TEMPERATURFÜHLER, INSBESONDERE FÜR TURBOLADER**
TEMPERATURE SENSOR, IN PARTICULAR FOR TURBOCHARGERS
CAPTEUR DE TEMPÉRATURE, EN PARTICULIER POUR UN TURBOCOMPRESSEUR

(30) Priorität: 02.12.2008 DE 102008060033
(43) Veröffentlichungstag der Anmeldung: 05.10.2011
(73) Patentinhaber: Temperaturmeßtechnik Geraberg GmbH, 98693 Martinroda (DE)
(72) Erfinder: IRRGANG, Klaus, 98716 Geraberg (DE); KÄMPF, Hartmut, 99338 Angelroda (DE); SCHÄTZLER, Klaus-Dieter, 98716 Geraberg (DE); HEINZ, Andreas, 98716 Geschwenda (DE)
(74) Vertreter: Liedtke, Klaus
(86) Internationale Anmeldenummer: PCT/EP2009/066078
(87) Internationale Veröffentlichungsnummer: WO 2010/063682

(56) Entgegenhaltungen:
- DE-A1- 4 138 460
- US-A- 4 485 263
- US-A- 4 865 462
- US-A- 5 662 418

## Beschreibung

Die Erfindung betrifft einen Temperaturfühler mit einem Thermoelement, der eine hitzebeständige Mantelleitung aufweist, an dessen dem Messmedium zugewandten Ende ein Sensorelement angeordnet ist und bei dem durch ein Metallrohr der Mantelleitung elektrische Anschlussleitungen für den Anschluss des Sensorelementes an eine elektronische Auswerteeinheit geführt sind.

Derartige Temperaturfühler sind geeignet für den Einsatz in Abgassträngen von Verbrennungsmotoren, insbesondere bei Aufladung mittels Turbolader und Kompressoren. Turbolader und Kompressoren müssen im Allgemeinen vor Überhitzung geschützt werden. Dazu werden Temperaturfühler im Turbolader- bzw. Kompressorgehäuse angeordnet und mit Auswerteeinrichtungen verschaltet. Bei Turboladern im Dieselbetrieb sind die Schutzeinrichtungen auf Temperaturen zwischen 600°C und 900°C eingestellt. Bei benzinbetriebenen Motoren mit Turboladern und Kompressoren erhöht sich die Schutztemperatur auf ca. 1.100°C. Die Temperatur im Turbolader kann aber nicht nur als Abschaltwert, sondern auch als Regelgröße im Zusammenhang mit anderen Sensoren im Abgas- und Ansaugstrang zur Steuerung des Antriebs verwendet werden.

Im Stand der Technik sind vielfältige Ausführungen für Temperaturfühler bekannt, die für den Einsatz bei erhöhten Temperaturen vorgesehen sind.

In DE 40 21 997 C1 ist ein Hochtemperatur-Thermistor beschrieben, der im Inneren eines hitzebeständigen Metallrohres angeordnet ist und der aus einem vorgegebenen Gemisch zur Ausbildung einer Keramik besteht, so dass ein gewisses Änderungsmaß des Widerstandes innerhalb vorgegebener Grenzen liegt.

Ferner wird in EP 0 783 096 B1 eine Temperaturvorrichtung vorgeschlagen, wobei ein Metallrohr und ein Isolator zum Aufrechterhalten der elektrischen Isolierung des Metallrohres und der innen liegenden Metalldrähte vorgesehen sind. Dabei ist ein Metalldeckel auf ein Ende des Metallrohres zum Bedecken eines Temperaturerfassungselementes vorgesehen.

In DE 198 06 110 C2 wird ein Abgassensor beschrieben, der ein wärmeempfindliches Element aus einem Keramiksubstrat enthält, auf dem Platinwiderstandszuleitung-Kontakt-Pads ausgebildet sind. Mit den Kontakt-Pads ist der Kabelanschluss direkt verbunden.

Aus DE 10 2006 034 248 B3 ist es bekannt, einen elektrischen Messwiderstand in einem Füllstoff und einem Schutzrohr so anzuordnen, dass die Dichte des Füllstoffes längs des Schutzrohres einen Gradienten aufweist, wobei die Dichte des Füllstoffes an der Stelle ein Maximum hat, an der das Schutzrohr eine Engstelle aufweist.

Weiterhin ist nach DE 10 2004 007 906 A1 ein keramisch isolierter Hochtemperatursensor bekannt, bei dem das untere Ende eines Fassungselementes in das zu messende Medium taucht, wobei das Fassungselement aus einem Keramikkörper besteht, in dessen Innenbohrung Innenleiter verlaufen, die ein Messelement mit einem elektrischen Anschuss verbinden.

Ferner ist in US 40 18 624 A ein Temperaturfühler mit einem Thermoelement beschrieben, der eine Mantelleitung aufweist, an dessen dem Messmedium zugewandten Ende ein Sensorelement angeordnet ist und bei dem durch ein Metallrohr der Mantelleitung elektrische Anschlussleitungen für den Anschluss des Sensorelementes an eine elektronische Auswerteeinheit geführt sind. Das Sensorelement besteht aus einer Thermodrahtperle, die aus der Mantelleitung herausragt und von einer Schutzhülse umschlossen wird.

In US 5 662 418 A wird ein Temperaturfühler beschrieben, bei dem das Sensorelement aus einer Thermodrahtperle besteht, die aus einer keramischen Hülse herausragt und von einer Schutzhülse umschlossen ist.

Die bekannten Ausführungen weisen bei einem Dauereinsatz von 1.100°C eine zu geringe Lebensdauer sowie eine zu hohe Sensordrift auf.

Der Erfindung liegt die Aufgabe zugrunde, einen Temperaturfühler der eingangs genannten Art zu schaffen, der bei Temperaturen bis zu 1.200 °C einsatzfähig ist, schnelle Temperaturänderungen erfassen kann und eine geringe Ausfallrate aufweist.

Erfindungsgemäß wird die Aufgabe mit einem Temperaturfühler, welcher die in Anspruch 1 angegebenen Merkmale enthält, gelöst.

Vorteilhafte Ausgestaltungen sind in den abhängigen Ansprüchen angegeben.

Das Sensorelement ragt aus dem Metallrohr heraus und ist von einer Schutzhülse umschlossen, welche auf dem dem Messmedium zugewandten Ende des Metallrohres befestigt ist. Das hitzebeständige Metallrohr besteht aus einem biegsamen, dünnwandigen Werkstoff und weist einen Außendurchmesser von 1,5 mm bis 4 mm, vorzugsweise von 1,8 mm bis 2,5 mm auf. An dem Bereich des Metallrohres, das dem Messmedium abgewandt ist, sind Anschlussdrähte herausgeführt, die eine direkte Verbindung ohne Zwischenkabel bzw. -leitungen zu einer Bordelektronik herstellen. Die im Metallrohr geführten Leitungen sind von einem keramischen Pulver umgeben, wobei das dem Messmedium zugewandten Ende des Metallrohres eine Verjüngung aufweist, mit der das im Rohr befindliche keramische Pulver soweit verdichtet wird, dass es mindestens teilweise versintert ist.

Es ist vorteilhaft, wenn die herausgeführten Drähte und die Bordelektronik fest auf einer Platine vergossen sind.

Ferner ist es möglich, dass das Sensorelement in einer Keramik- oder Kittfüllung in der Schutzhülse eingebettet ist.

Als Sensorelement wird vorteilhaft eine Thermodrahtperle verwendet.

Ferner ist es möglich, dass die Schutzhülse im vorderen Bereich eine Einengung aufweist, durch welche eine Anpassung erfolgt, so dass ein geringer Abstand der Thermodrahtperle von der Hülse erreicht wird.

Für die Gestaltung des Innenaufbaus sowie der Schutzhülse bestehen mehrere Möglichkeiten.

Zum einen ist es möglich, dass die Schutzhülse mindestens im vorderen Bereich eine Mikrostruktur und/oder eine Schmutz abweisende und hochtemperaturstabile Beschichtung aufweist. Diese Beschichtung erhöht die Standzeit und gestattet es, die Schutzhülse sehr dünnwandig auszuführen. Weiterhin weist die Schicht einen geeigneten Reflexionsfaktor auf, so dass der Einbaufehler und die dynamischen Eigenschaften des Temperaturfühlers verbessert werden. Weiterhin kann die vordere Spitze des Mantelthermoelements abgehämmert, verjüngt bzw. im Außendurchmesser reduziert werden, so dass das Füllpulver im Inneren versintert. Die Versinterung bewirkt, dass bei Erschütterungen das Pulver um die Thermodrahtperle herum nicht herausfallen kann. Durch das Abhämmern entsteht zwischen Mantelleitung und äußerem Schutzrohr ein Spalt im vorderen sensitiven Bereich.

Die Thermodrahtperle ist groß ausgeführt und wirkt als Strahlungsempfänger. Da die Schutzhülse als dünnwandige Metallhülse ausgeführt ist, werden Temperaturänderungen über die Metallhülse schnell aufgenommen und nach innen durch Strahlung weitergeleitet. Durch diese Anordnung sind die Zeitkonstanten beim Aufheizen und beim Abkühlen gleich. In die überzuschiebende Schutzhülse können dosiert eine Keramikpaste oder ein -pulver eingebracht werden. In diesem Fall ist die Thermodrahtperle fest in der Keramik angeordnet und die Wärmeübertragung im Inneren des Schutzrohres erfolgt über Wärmeleitung.

Es sind auch Ausführungen möglich, bei denen die Schutzhülse zweiteilig ausgebildet ist. Sie besteht beispielsweise aus einem vorderen Teil und einem hinteren Teil. Das vordere Teil wird durch Tiefziehen oder Fließpressen hergestellt, oder besteht aus einem Sonderdrehteil mit Tiefloch- oder Sackbohrung, das hinten einen Stauchrand enthält und das beschichtet ist. Der hintere Teil besteht aus einem Zylinder, der ebenfalls mit einem Stauchrand versehen ist. Die beiden Stauchränder sind miteinander verschweißt, so dass ein Bund entsteht.

Entlang der Mantelleitung und außerhalb des Turboladers können Dehnungsspiralen angeordnet werden, bei denen die Mantelleitung in mehreren Bögen oder Windungen aufgerollt ist. Damit können Schwingungen und schnelle Längenänderungen ausgeglichen werden und die Montage wird erleichtert. Zweckmäβigerweise sind an die Mantelleitung in bestimmten Abständen Fahnen angeheftet. An diesen Fahnen wird die Mantelleitung an den Turbolader und den anderen Antriebsaggregaten befestigt. Die Anordnung erfordert keine Übergangsstelle von Mantelleitung zu einer Ausgleichsleitung. Durch die flexible Ausbildung der Mantelleitung kann diese direkt zur Elektronik geführt werden, ohne dass Übergangsstellen zwischen Mantelleitung und einer Ausgleichsleitung erforderlich sind. Ausgleichsleitungen sind insbesondere beim Einsatz der Elemente in spritzwassergefährdeten Bereichen aufgrund der sehr starken Temperaturwechsel, hauptsächlich bei sehr flach oder liegend eingebauten Motoren, stark gefährdet und deshalb auch sehr unzuverlässig.

Der Temperaturfühler kann beispielsweise im Turboladergehäuse direkt vor dem Turbinenschaufelrad sitzend eingesetzt werden, kann schnelle Temperaturänderungen messen und kann als Reglungselement verwendet werden. Der Fühler weist selbst bei einem Dauereinsatz bei Temperaturen um 1.100°C eine hohe Lebensdauer und niedrige Sensordrift auf. Vorteilhaft ist ferner, dass die Abgasströmung nur geringfügig gestört wird. Er besitzt einen geringen statischthermischen Einbaufehler. Er zeichnet sich durch eine geringe Ausfallrate auf. Der Temperaturfühler ist modular aufgebaut und kann kostengünstig hergestellt werden.

Die Erfindung wird im Folgenden anhand eines Ausführungsbeispieles näher erläutert. Das Ausführungsbeispiel beschreibt die Anwendung in einen Turbolader.

In den zugehörigen Zeichnungen zeigen:
- Figur 1: die Spitze eines Temperaturfühlers mit eingebetteter Thermodrahtperle,
- Figur 2: die Spitze eines Temperaturfühlers mit freiliegender Thermodrahtperle,
- Figur 3: eine Ausführung mit Befestigung der Schutzhülse durch eine Quetschverbindung,
- Figur 4: eine Ausführung, bei der die Schutzhülse mit einem Bund versehen ist,
- Figur 5: eine schematische Darstellung der Gesamtanordnung,
- Figur 6: eine Anordnung, bei der die Befestigung des Temperatur-fühlers mit einem Ringbund erfolgt,
und
- Figur 7: eine Draufsicht auf die Bordelektronik.

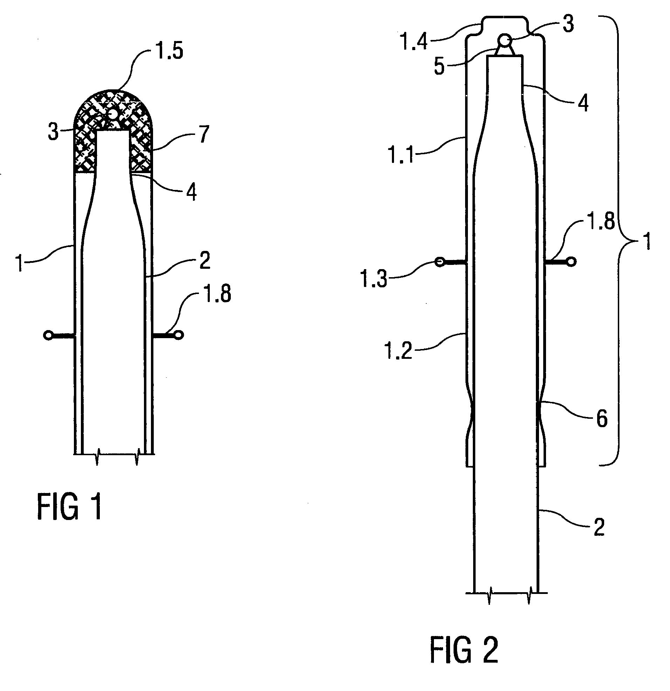

**Figur 1** zeigt eine Ausführung, bei der ein Mantelthermoelement mit einem weichen, dünnwandigen Metallmantel im Durchmesserbereich 1,5 mm bis 3 mm verwendet wird. Im hinteren, dem Messmedium abgewandten Bereich des Mantelthermoelementes befinden sich zwei frei herausragende Thermodrähte 5, die mit einer Bordelektronik elektrisch verbunden sind. Im vorderen Teil ist an den in der Mantelleitung 2 geführten Thermodrähten 5 eine Thermoperle 3 angeschweißt. Die Thermodrahtperle 3 ragt kurz aus dem verdichteten Keramikfüllpulver 7 des vorderen Endes des Thermoelementes. Die Mantelleitung 2 weist an dieser Stelle eine Verjüngung 4 zur Erhöhung der Verdichtung auf. Über das Mantelthermoelement, das durch seine dünnwandige, preiswerte und sehr flexible Ausbildung seines Mantels nicht zum direkten Einsatz in einem Abgasstrom geeignet ist, ist eine Schutzhülse 1 mit Bund gezogen. Die Schutzhülse 1 ist mittels einer oder mehrerer Sicken 6 mit der Mantelleitung 2 fest verbunden.

In **Figur 2** ist eine Ausführung dargestellt, bei der die Thermodrahtperle 3 in einer Keramikfüllung 7 aus Keramikpulver oder - paste eingebettet ist. Die Schutzhülse 1 ist an ihrer vorderen, dem Messmedium zugewandten Seite mit einer Rundung 1.5 versehen. Die Schutzhülse 1 besteht aus einem Vorderteil 1.1 und einem Hinterteil 1.2, die miteinander verschweißt sind, wobei die Schweißstelle 1.3 einen Ringbund 1.8 bildet. Der Ringbund 1.8 befindet sich an der Stelle, an der sich der Prozessanschluss - beispielsweise in einem Turbolader - befindet. Im hinteren Teil, also außerhalb des Abgasmedienstromes und/oder direkt an der Fühlerspitze, ist die Schutzhülse 1 mit der Mantelleitung 2 zur besseren thermischen Kopplung verquetscht. Zur besseren Wärmeübertragung von der Schutzhülse 1 zur Thermodrahtperle 3 ist die Schutzhülse 1 mit einer Einengung 1.4 ihres Durchmessers an der Spitze versehen, so dass sich allseitig geringe Abstände zwischen Thermodrahtperle 3 und Schutzhülse 1 ergeben und damit ein schnelles Ansprechverhalten erreicht wird.

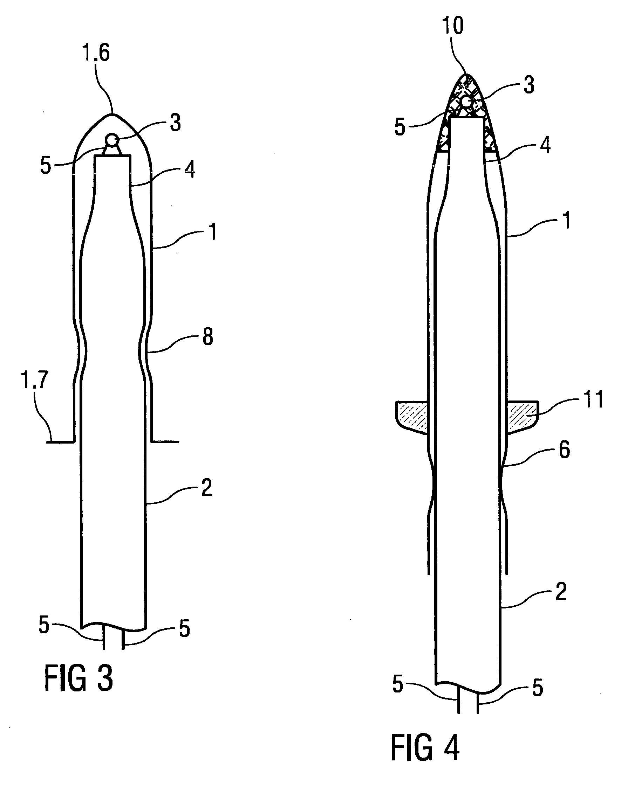

Die **Figur 3** zeigt eine Beispielsform der Messspitze, bei der eine tiefgezogene Schutzhülse 1 mit einer bohrerspitzenförmig ausgebildeten Hülsenspitze 1.6 sowie mit einem im hinteren Teil liegenden Schutzhülsenbund 1.7 versehen ist. Die Schutzhülse 1 ist mit der Mantelleitung 2 formschlüssig mittels einer Quetschung 8 verbunden. Die Mantelleitung 2 endet in einer Verjüngung 4. Am messmediumseitigen Ende der Mantelleitung 2 ist die Thermodrahtperle 3 angeschweißt. Vorteilhaft an dieser Ausbildung ist insbesondere, dass außer der Thermodrahtperle 3 keine weiteren Schweißstellen bestehen. Mit dem Messmedium kommen deshalb keine Schweißstellen in Berührung, was der Anordnung eine hohe Zuverlässigkeit verleiht. Die Quetschung 8 verhindert, dass die Schutzhülse 1 sich von der Mantelleitung 2 löst. Es ist auch möglich, den Schutzhülsenbund 1.7 mit der Mantelleitung 2 zu verschweißen.

In **Figur 4** ist eine weitere Messspitzenausführung dargestellt. Hierbei ist die Mantelleitung 2 mit einer schlank ausgeführten Schutzhülse 1 versehen. Auf der Schutzhülse 1 ist ein Befestigungsbund 11 angeschweißt. Die Schutzhülse 1 ist so weit verjüngt, dass sie seitlich an der Verjüngung 4 der Mantelleitung 1 anliegt. Im Vorderteil der schlank ausgeführten Schutzhülse 1 befindet sich ein keramischer Kitt 10, der nach der Montage aushärtet. Die Schutzhülse 1 ist mit der Mantelleitung 2 an einer Stelle mit einer Sicke 6 befestigt, die nicht in das Messmedium hineinragt. Bei dieser Ausführung ist vorteilhaft, dass sie nur zwei Schweißstellen aufweist, die beide nicht mit dem Messmedium in Berührung kommen, nämlich die Thermodrahtperle 3 und die Schweißnaht am Bund 11.

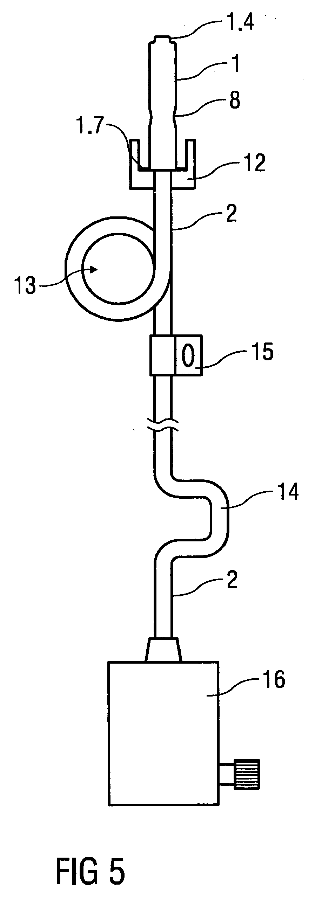

**Figur 5** zeigt ein Anwendungsbeispiel für den Einsatz der Temperaturmesseinrichtung in einem Turbolader oder einem Kompressor. Der Temperaturfühler weist eine Schutzhülse 1 mit einer Einengung 1.4 auf. Die Schutzhülse 1 ist mit der Mantelleitung 2 mittels einer formschlüssige Quetschung 8 fest verbunden. An der Schutzhülse 1 ist ein Stauchbund 1.7 angeordnet, der mit einer Überwurfmutter 12 befestigt werden kann. Die Befestigung der Mantelleitung 2 am Motor und anderen Aggregaten erfolgt mit einer oder mehreren Befestigungsschellen 15, die an der Mantelleitung 2 angeheftet sind. Zum Längen- und Schwingungsausgleich dienen Ausgleichsschleifen 13 und/oder Ausgleichsbogen 14. Es ist auch möglich, dass die Ausgleichsschleife 13 senkrecht zur Mantelleitungsachse ausgebildet ist und aus mehreren Windungen besteht. Die Mantelleitung 2 führt zur Bordelektronik 16 und ist mit dieser fest vergossen.

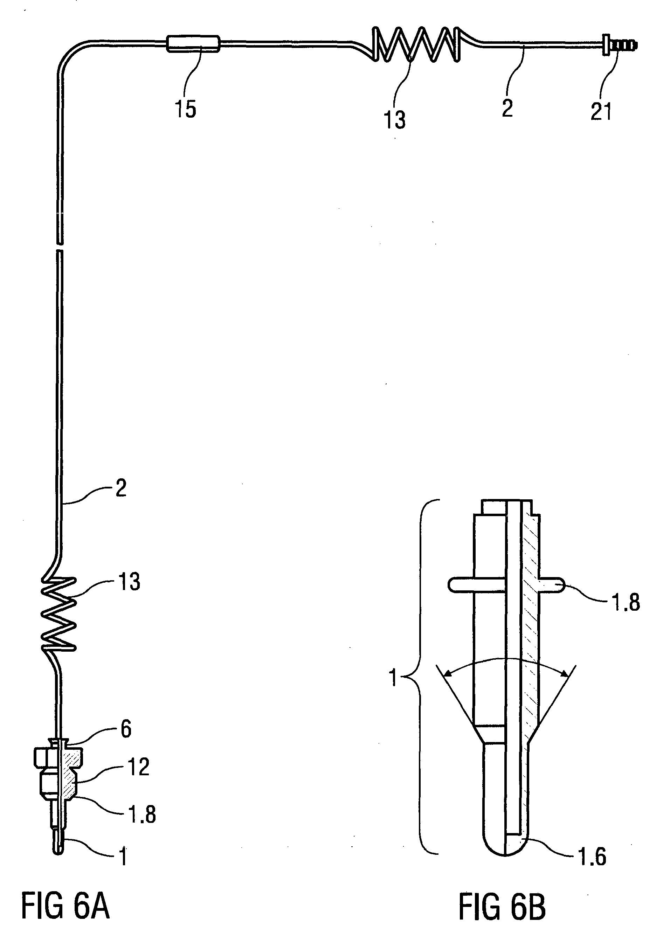

Die **Figur 6A** erläutern eine Ausführung, bei der die Befestigung des Temperaturfühlers an der Messstelle mit einem speziellen Ringbund 1.8 und einer Überwurfmutter 12 erfolgt. Eine vorteilhafte Ausbildung der Schutzhülse 1 ist als Einzelheit in **Figur 6B** dargestellt. Sie ist mit einem Dichtkonus versehen, der im dargestellten Beispiel einen 60°-Winkel aufweist, mit dem eine sichere Abdichtung erreicht werden kann.

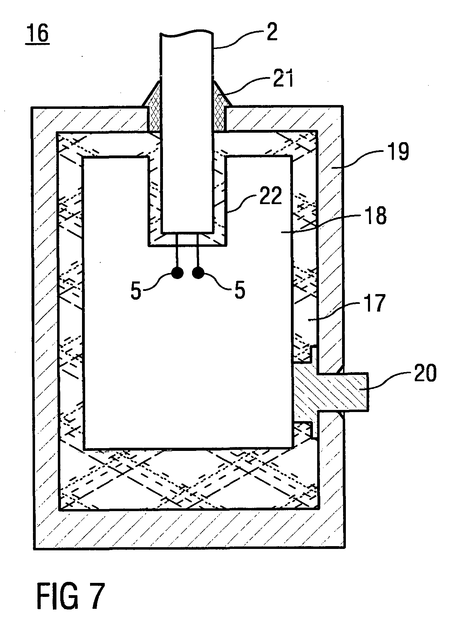

Die Befestigung der Mantelleitung 2 an der Bordelektronik 16 zeigt **Figur 7****.** Die Verbindungsstelle einschließlich der Bordelektronik ist fest eingegossen oder mit Kunststoff umspritzt, so dass die Mantelleitung 2 und das Gehäuse 19 eine erschütterungsfeste Einheit bilden. Die Mantelleitung 2 ist in eine schlitzförmige Ausfräsung 22 der Leiterkarte 18 durch einen Durchgang 21 einschiebbar. Die freien Enden der Mantelleitung 2 sind leicht abgewinkelt und in die Leiterkarte 18 eingelötet. Die gesamte Leiterkarte 18 ist mittels Verguss 17 mit dem Gehäuse 19 fest verbunden. Über den Anschluss 20 werden die Signale nach außen geführt.

### BEZUGSZEICHENLISTE

- 1: Schutzhülse
- 1.1: Vorderteil der Schutzhülse
- 1.2: Hinterteil der Schutzhülse
- 1.3: Schweißstelle
- 1.4: Einengung
- 1.5: Rundung
- 1.6: Hülsenspitze
- 1.7: Stauchbund
- 1.8: Ringbund
- 2: Mantelleitung
- 3: Thermodrahtperle
- 4: Verjüngung der Mantelleitung
- 5: Thermodrähte
- 6: Sicke
- 7: Keramikfüllung
- 8: Quetschung
- 10: Keramischer Kitt
- 11: Befestigungsbund
- 12: Überwurfmutter
- 13: Ausgleichschlinge
- 14: Ausgleichbogen
- 15: Befestigungsschelle
- 16: Bordelektronik
- 17: Verguss
- 18: Leiterkarte
- 19: Gehäuse
- 20: Anschluss
- 21: Durchgang
- 22: Schlitzfräsung

## Patentansprüche

1. Temperaturfühler für Turbolader, der eine hitzebeständige Mantelleitung (2) aufweist, an dessen einem Messmedium zugewandten Ende ein Sensorelement angeordnet ist und bei dem durch ein Metallrohr der Mantelleitung (2) Thermodrähte (5) für den Anschluss des Sensorelementes an eine elektronische Auswerteeinheit geführt sind, wobei das Sensorelement aus einer Thermodrahtperle (3) besteht, die aus der Mantelleitung (2) herausragt und von einer Schutzhülse (1), welche auf dem dem Messmedium zugewandten Ende der Mantelleitung (2) befestigt ist, umschlossen wird, wobei die Schutzhülse (1) ein einteiliges Vorderteil (1.1) ohne Schweißstellen aufweist, und wobei das Metallrohr der Mantelleitung (2) flexibel und dünnwandig ist, an dessen dem Messmedium abgewandten Bereich die Thermodrähte (5 herausgeführt sind und eine Verbindung zu einer Bordelektronik (16) herstellen, und wobei das dem Messmedium zugewandten Ende des Metallrohres eine Verjüngung (4) aufweist, in der ein in der Schutzhülse (1) befindliches keramisches Pulver soweit verdichtet ist, dass es mindestens teilweise versintert ist, **dadurch gekennzeichnet dass** die Schutzhülse (1) aus dem Vorderteil (1.1) und einem Hinterteil (1.2) besteht; dass Vorderteil (1.1) und Hinterteil (1.2) der Schutzhülse (1) mit einer Schweißstelle (1.3) verbunden sind, die sich an der Stelle befindet, an der sich der Prozessanschluss im Turbolader befindet; und dass die Mantelleitung (2) das Metallrohr mit einem Außendurchmesser von 1,5 bis 4 mm aufweist; und dass die Mantelleitung mit der Bordelektronik (16) fest vergossen ist.

2. Temperaturfühler nach Anspruch 1, **dadurch gekennzeichnet, dass** die herausgeführten Thermodrähte (5) und die Bordelektronik (16) fest auf einer Leiterkarte (18) vergossen sind.

3. Temperaturfühler nach Anspruch 1 oder 2, **dadurch gekennzeichnet, dass** die Thermodrahtperle (3) mindestens teilweise in einer Keramik- oder Kittfüllung in der Schutzhülse (1) eingebettet ist.

4. Temperaturfühler nach einem der vorhergehenden Ansprüche, **dadurch gekennzeichnet, dass** die Schutzhülse (1) im vorderen Bereich eine Einengung (1.4) aufweist, durch welche eine Anpassung der Schutzhülse (1) an das Sensorelement (3) erfolgt, so dass ein geringer Abstand zwischen Schutzhülse (1) und Thermodrahtperle (3) erreicht wird.

5. Temperaturfühler nach Anspruch 4, **dadurch gekennzeichnet, dass** die Verjüngung (4) des Metallrohres und die Einengung (1.4) der Schutzhülse (1) jeweils konisch ausgebildet sind, wobei der Konus der Schutzhülse einen etwas größeren Öffnungswinkel als der Konus des Metallrohres aufweist.

6. Temperaturfühler nach einem der vorhergehenden Ansprüche, **dadurch gekennzeichnet, dass** am Vorderteil (1.1) der Schutzhülse (1) ein zylindrisches Hinterteil (1.2) angeschweißt ist.

7. Temperaturfühler nach einem der vorhergehenden Ansprüche, **dadurch gekennzeichnet, dass** die Schutzhülse (1) an der Mantelleitung (2) durch eine Befestigung mittels Schweißverbindung oder Versickung gesichert ist, wobei sich die Befestigungsstelle hinter einem Prozessanschluss auf der dem Messmedium abgewandten Seite befindet.

8. Temperaturfühler nach einem der vorhergehenden Ansprüche, **dadurch gekennzeichnet, dass** die Mantelleitung (2) zwischen dem hinteren Ende der Schutzhülse (1) und der Bordelektronik (16) Längenausgleichelemente (13, 14) und/oder Befestigungsschellen (15) enthält.

## Claims

1. Thermal sensor for turbochargers; equipped with a sheathed fireproof cable (2) including a sensor element attached to the cable end facing the sample medium and featuring thermo wires (5) that run through a metal tube with the sheathed cable (2) and serve to connect the sensor element to an electronic evaluation unit, whereas the sensor element consists of a thermo wire bead (3), which protrudes from the sheathed cable (2) and is girded by a protective sleeve (1) that is attached to the end of the sheathed cable (2) facing the sample medium, whereas the protective sleeve (1) comprises a one-piece front part (1.1), without any welding points, and whereas the metal tube of the sheathed cable (2) is flexible and thin-walled, with the thermo wires (5) running through the section pointing away from the sample medium and creating an interface with an on-board electronic system (16) and with the end of the metal tube facing the sample medium featuring a tapering (4), where a ceramic powder that is lodged inside the protective sleeve (1) is highly densified to such a degree that it is sintered, at least in part, **characterised in that** the protective sleeve (1) consists of the front part (1.1) and a rear part (1.2), that front part (1.1) and rear part (1.2) of the protective sleeve (1) are connected through a welding point (1.3) that is located at the position, where the process fitting is positioned inside the turbocharger, and that the sheathed cable (2) includes the metal tube with a major diameter of 1.5 mm up to 4 mm, and that the metal tube is solid cast with the on-board electronic system (16).

2. Thermal sensor according to Claim 1, **characterised in that** the protruding thermo wires (5) and the on-board electronic system (16) are solid cast on a circuit board (18).

3. Thermal sensor according to Claims 1 or 2, **characterised in that** the thermo wire bead (3) is embedded, at least in part, in a ceramic or cement filling inside the protective sleeve (1).

4. Thermal sensor according to one of the Claims indicated above, **characterised in that** the protective sleeve (1) features a narrowing (1.4) at the front, which allows the protective sleeve (1) to be adjusted to the sensor element (3), thus achieving a short distance between protective sleeve (1) and thermal wire bead (3).

5. Thermal sensor according to Claim 4, **characterised in that**, both, the tapering (4) of the metal tube as well as the narrowing (1.4) of the protective sleeve (1) are conically shaped, with the cone of the protective sleeve having a slightly larger angle than that of the metal tube.

6. Thermal sensor according to one of the Claims indicated above, **characterised in that** a cylindrical rear part (1.2.) is welded to the front part (1.1) of the protective sleeve (1).

7. Thermal sensor according to one of the Claims indicated above, **characterised in that** the protective sleeve (1) is secured at the sheathed cable (2) by a fixture, either through a welded joint or through lock beading, with the fixture point being located behind a process fitting at the side pointing away from the sample medium.

8. Thermal sensor according to one of the Claims indicated above, **characterised in that** the sheathed cable (2) includes length compensation elements (13, 14) and/or fastening clamps (15), which are located between the rear end of the protective sleeve (1) and the on-board electronic system (16).

## Revendications

1. Capteur de température pour turbocompresseur, comportant un câble sous gaine (2) résistant à la chaleur, à l'extrémité opposée à un fluide de mesure duquel est disposé un élément capteur, et où des fils thermoélectriques (5) pour la connexion de l'élément capteur à une unité d'analyse électronique sont conduits dans un tube métallique du câble sous gaine (2), l'élément capteur étant constitué d'une perle de fils thermoélectriques (3) sortant du câble sous gaine (2) et étant entouré d'une enveloppe protectrice (1) fixée à l'extrémité du câble sous gaine (2) opposée au fluide de mesure, l'enveloppe protectrice (1) présentant une partie avant (1.1) constituée d'une seule pièce sans soudures, le tube métallique du câble sous gaine (2) étant flexible et à paroi mince, les fils thermoélectriques (5) sortant de la partie de celui-ci distante du fluide de mesure et réalisant une connexion à une électronique de bord (16), et l'extrémité du tube métallique opposée au fluide de mesure présentant un amincissement (4) où une poudre céramique disposée dans l'enveloppe protectrice (1) est compactée de manière à être au moins partiellement frittée, **caractérisé en ce que** l'enveloppe protectrice (1) est constituée de la partie avant (1.1) et d'une partie arrière (1.2), **en ce que** la partie avant (1.1) et la partie arrière (1.2) de l'enveloppe protectrice (1) sont raccordées à une soudure (1.3) située à l'emplacement du raccord de processus dans le turbocompresseur, et **en ce que** le câble sous gaine (2) comporte le tube métallique avec un diamètre compris entre 1,5 et 4 mm, et **en ce que** le câble sous gaine est fixement scellé avec l'électronique de bord (16).

2. Capteur de température selon la revendication 1, **caractérisé en ce que** les fils thermoélectriques (5) sortis et l'électronique de bord (16) sont fixement scellés sur une carte imprimée (18).

3. Capteur de température selon la revendication 1 ou la revendication 2, **caractérisé en ce que** la perle de fils thermoélectriques (3) est au moins partiellement incorporée à une charge en céramique ou en mastic de l'enveloppe protectrice (1).

4. Capteur de température selon l'une des revendications précédentes, **caractérisé en ce que** l'enveloppe protectrice (1) présente dans la partie avant un rétrécissement (1.4) permettant un ajustement de l'enveloppe protectrice (1) sur l'élément capteur (3), de manière à obtenir un léger intervalle entre l'enveloppe protectrice (1) et la perle de fils thermoélectriques (3).

5. Capteur de température selon la revendication 4, **caractérisé en ce que** l'amincissement (4) du tube métallique et le rétrécissement (1.4) de l'enveloppe protectrice (1) sont réalisés chacun avec une forme conique, le cône de l'enveloppe protectrice présentant un angle d'ouverture légèrement supérieur au cône du tube métallique.

6. Capteur de température selon l'une des revendications précédentes, **caractérisé en ce qu'**une partie arrière (1.2) cylindrique est soudée contre la partie avant (1.1) de l'enveloppe protectrice (1).

7. Capteur de température selon l'une des revendications précédentes, **caractérisé en ce que** l'enveloppe protectrice (1) est fixée contre le câble sous gaine (2) au moyen d'une connexion réalisée par soudage ou sertissage, le point de fixation se trouvant derrière un raccord de processus sur le côté distant du fluide de mesure.

8. Capteur de température selon l'une des revendications précédentes, **caractérisé en ce que** le câble sous gaine (2) comprend des éléments de compensation de longueur (13, 14) et/ou des colliers de fixation (15) entre l'extrémité arrière de l'enveloppe protectrice (1) et l'électronique de bord (16).
